# EUROPEAN PATENT APPLICATION

(11) **EP 4 026 659 A1**
(43) Date of publication of application: **13.07.2022**
(21) Application number: 21150579.7
(22) Date of filing: 07.01.2021
(51) Int. Cl.: B25J 7/00, B25J 9/10, B25J 15/08, B25J 19/00

(54) **MICROGRIPPER DEVICE**

(71) Applicant: Mikron Switzerland AG, 2017 Boudry (CH)
(72) Inventor: Baur, Charles, 2024 St-Aubin (CH); Borelli, Luigi, 2014 Bôle (CH); Martinez, Thomas, 2000 Neuchâtel (CH); Perriard, Yves, 2000 Neuchâtel (CH); Thomas, Sean, 1010 Lausanne (CH); Tissot-Daguette, Loïc Benoit, 1400 Yverdon-les-Bains (CH)
(74) Representative: P&TS SA (AG, Ltd.)

(57) **Abstract**

This invention concerns a gripping device comprising gripper jaws (33) designed to take an open position and a closed position, one or more actuators (20.1, 20.2) formed with a shape memory material, designed to change from a first shape to a second shape upon reaching a transition temperature, at least one controllable heating element for heating the one or more actuators and a bi-stable element (35) capable of switching between a first stable state and a second stable state. The at least one actuator (20.1, 20.2) is coupled to the bi-stable element (35) such that it can exert a force on the bi-stable element (35), wherein said force is capable of causing the bi-stable element (35) to switch between its stable states. The change of stable state of the bi-stable element (35) induces the opening and closing of the gripper jaws (33).

## Description

### Technical domain

The present invention concerns microgripper device for industrial processes, in particular for use in assembly and production lines.

### Related art

Miniaturization of technical and medical devices and products has brought with it the need to adapt industrial processes for handling the individual components of these devices. Automated production and assembly need to adapt to provide not only smaller and lighter, but also reliable and stable gripping and cutting tools which can operate with great precision in complex movements and exert an adequate amount of force to handle the small components, without increasing the complexity of the production process.

Conventionally, industrial grippers are primarily driven by pneumatic actuators. However, these actuators are poorly equipped to meet the challenges of miniaturized industrial production processes. Grippers comprising jaws driven by an electrical actuator, such as an electrical motor, are fast and flexible but the dimension of the electrical motor is a limit to the miniaturization. Vacuum gripper are also widely used for the handling of smaller parts.

More recently, grippers actuated by alternative actuator mechanisms have been suggested, most promisingly, mechanisms based on shape memory material ("SMM"), in particular shape memory alloys ("SMA"). Objects made of shape memory materials are able to recover their original shape from a plastic deformation upon application of a suitable stimulus, e.g. when heated to or above a predefined transition temperature.

The use of a plane shaped shape memory alloy (SMA) actuators operated in agonist-antagonist integrated on silicon micro-grippers has been disclosed in Mayra Garcés-Schröder, et al., Proceedings 2017, 1, 385, Eurosensors Conference Paris, France, 3-6 September 2017; "Micro-Grippers with Femtosecond-Laser Machined IN-Plane Agonist-Antagonist SMA Actuators Integrated on Wafer-Level by Galvanic Riveting".

Also, WO2020078773A1 discloses a mechanical actuator for an end of arm tooling ("EOAT") device, having a functional unit designed to is designed to change its dimension reversibly in a preferred direction when energy is supplied. The functional unit may be made from material with shape memory properties.

However, once the temperature of the SMA actuator drops below its transition temperature, the shape memory effect is attenuated and the actuator is easily deformed again. Therefore, if the position of the tool taken upon change of shape of the actuator needs to be maintained, a continued supply of energy in form of heat is required.

The present invention sets out to find a solution for providing an industrial microgripper for automated processes, which overcomes the shortcomings and limitations of the state of the art.

### Short disclosure of the invention

It is an aim of the present invention to provide a microgripper device, whose opening and closing movements can be easily and reliably controlled and which does not require a continued supply of energy to maintain its open or closed position.

It is another aim of the invention to provide a light-weight miniaturized gripper without compromising on the strength of the grip.

According to the invention, these aims are attained by the object of the attached claims, and especially by independent claims.

In particular, the aims are achieved by a gripping device comprising:
gripper jaws designed to take a first position for gripping an object and a second position for releasing the object,
one or more actuators formed with a shape memory material, designed to change from a first shape to a second shape upon reaching a predetermined transition temperature;
at least one controllable heating element for heating the one or more actuators;
a bi-stable element capable of flipping between a first stable state and a second stable state.

The at least one actuator is coupled to the bi-stable element such that the one or more actuator is arranged to exert a force, which may be a pull force or a push force, on the bi-stable element when the one or more actuator takes its second shape. Said force is capable of causing the bi-stable element to switch from its first stable state to its second stable state and/or from its second stable state to its first stable state. The gripper jaws are coupled to the bi-stable element such that the jaws are in the first closed position when the bi-stable element is in its first stable state, and in the second open position when the bi-stable element is in its second stable state.

A threshold energy must be applied to drive the change of stable state of the bi-stable element. Such threshold energy is provided by the SMM actuators. However, a stable state of the bi-stable element is maintained without any further need of energy.

The gripping device described herein is preferably a micro-gripping device. In the present document, a device is considered to be a micro-gripping device when the maximum transversal dimension of objects that can be manipulated is below 5 centi-meters, or below 2 centi-meters, or below 5 milli-meters.

The invention provides the advantage that the position of the gripper is driven by the temperature-induced change in shape of the one or more SMM actuator and the position taken by the gripper is maintained by the bi-stable element. The opening and/or closing of the gripper jaws can be easily controlled by applying heat to and removing heat from one or more SMM actuators. Such heat is preferably provided by an electric current. However other heating methods, such as electrical induction or solid state heating elements may be used.

The SMM actuators convert the heat produced by the electric energy into a deformation of the actuator and are interconnected with the bi-stable element in such a way that the deformation of the actuator induces the bi-stable element to flip from its first stable state to its second stable state. The bi-stable element maintains its stable state and the position of the gripper until an external trigger, e.g. in form of a pull force or a push force exerted by a second actuator, is provided and causes flipping of the bi-stable element to its other stable state.

Advantageously, switching of the bi-stable element is triggered when the actuator takes its original shape, which is the second shape, at or above the SMM actuator's transition temperature. However, a plastic deformation of the SMM actuator below its transition temperature does not result in a large enough force to trigger state changing of the bi-stable element. As a result, the bi-stable element will remain in the current stable state even if the temperature of the SMM actuator drops below the transition temperature of the SMM.

A continued supply of energy for maintaining the original shape, respectively preventing deformation of the actuator is therefore not required in order to keep the gripper in either an open or a closed position.

In SMM-driven grippers, which rely on a continued supply of thermal energy to maintain the original SMM shape, care must be taken not to overheat the SMM. Overheated SMM material may result in a deformation of the original shape.

The invention described herein overcomes this problem, since the temperature of the SMM actuators does not have to be maintained above the transition temperature in order to maintain the position of the gripper jaws. Instead, heat only needs to be supplied until the SMM actuator reaches its transition temperature, which triggers the change into its original shape, which is the second shape, and the movement of the gripper jaws. The stability of the jaw position is subsequently secured by means of the bi-stable element. The deformation of the SMM actuators will not affect the jaw position.

Introducing the bi-stable element in the gripper mechanism therefore results in a conservation of energy which makes the gripper more energy-efficient and more reliable in terms of its ability to maintain the position of the gripper jaws and /or their grip on an object. In a preferred embodiment, the required force for maintaining the position of the gripper jaws is provided solely by the bi-stable element.

In an embodiment the bi-stable element is a beam.

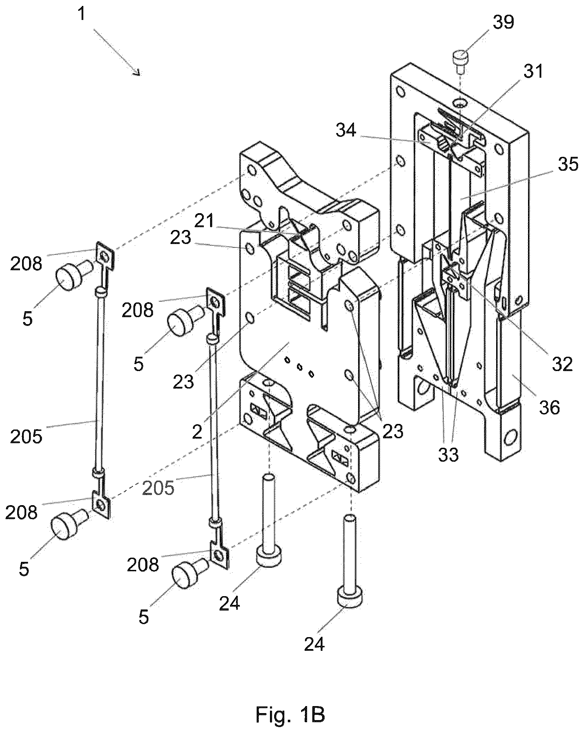

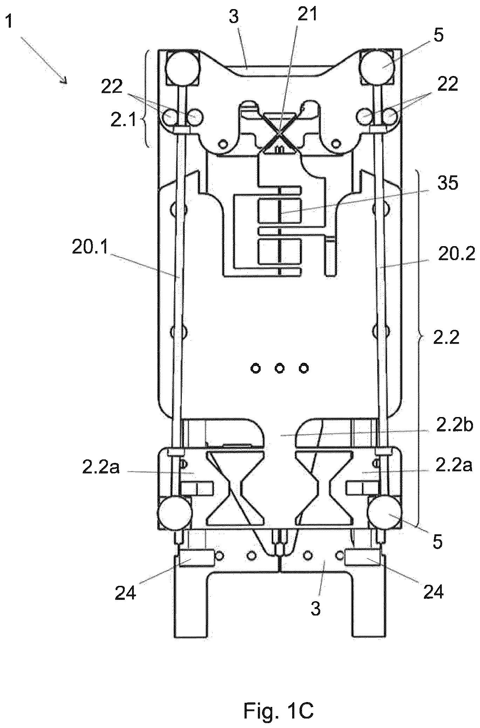

The beam can be a buckled beam. The term buckled as used herein signifies that a portion of the beam performs a sudden outwards movement, i.e. a movement away from the straight line between the two opposite ends of the beam, when a force above a predetermined strength is exerted onto the beam. A force below this predetermined strength will not cause a deformation of the beam. This force can be applied by a screw (red arrow on Fig 1B) that longitudinally compresses the beam in order to buckle it. By tightening more or less this precompression screw, we can tune the force applied on gripped object and the motion of the gripper jaws.

The bi-stable element described in this invention is however not limited to a beam or a buckled beam, other forms of bi-stable elements are possible and within the scope of this invention.

The actuators can comprise a shape memory material.

Preferably, said shape memory material is a shape memory alloy, for example a nickel-titanium alloy (NiTi) or a copper, aluminium, nickel alloy, which are known in the art. NiTi-based SMAs are preferable due to their stability and superior thermo-mechanic performance. However, SMA actuators can also be made from iron-based, copper-based alloys or other suitable metal alloys.

Different executions of the SMA actuator are possible. The SMA actuator may for example take the shape of a spring. In a spring the original shape of the SMA may correspond to a contracted shape and the deformed shape of the SMA may correspond to a relaxed shape.

The SMA spring may for example be a traction spring.

The SMA spring may also be a compression spring.

The SMA actuator may also be with varieties of shapes aimed at improving their physical properties such shapes could be obtained by bending, extruding or cutting processes.

One SMA actuator or one set of SMA actuator may be arranged in the gripping body in such a way that the actuator or set of actuators can cause the bi-stable element to flip into one of its two stable states, but not into its other stable state. As a result, the one or more actuators only cause the change of gripper position in one direction, i.e. either from a closed to an open position or, alternatively, from an open to a closed position. In order to drive the reverse change of position, a different counter force, which may, by way of example, be a mechanical counter force, can be provided.

Alternatively, the gripping device can have two actuators or sets of actuators. A first actuator or actuator set is configured to trigger the flipping of the bi-stable element from its first stable state to its second stable state, thereby causing the gripper jaws to open. A second actuator or set of actuators is configured to drive the reverse movement. Upon shape-change at and above the SMA transition temperature the second actuator or set of actuators triggers a flipping of the bi-stable element from its second position into its first position, thereby causing the gripper jaws to close.

The first and the second actuators or sets of actuators can be activated, i.e. heated, alternatively.

Each actuator or set of actuators can be activated or heated to or above its transition temperature only when the SMA of the other actuator or set of actuators is sufficiently cooled to take a deformed shape.

The first and the second actuator or set of actuators may be arranged as antagonistic bias pair springs. In this formation, when the second actuator or set of actuators sufficiently cooled to take their deformed shape, the first actuator or set of actuators actively pulls the second actuator or set of actuators upon reaching the transition temperature, while also pulling the bi-stable element. Likewise, the second actuator or set of actuators is configured to pull the first actuator or first set of actuators and the bi-stable element when reaching its transition temperature.

The gripping device is configured such that the gripper jaws take a predetermined position for opening and a predetermined position for closing.

The movement of the jaws, which is induced by the bi-stable element, is a precise movement. The jaws stop at the exact desired position. The pressure exerted by the gripper jaws is determined by the bi-stable element. The bi-stable element provides the gripping force of the gripper jaws. The one or more actuator serves to control the change of stable states of the bi-stable element. However, the actuator does not define the strength of the grip of the jaws.

The gripping device may comprise further features to support the reliable operation of the gripper. Such features may include means to adjustably preload the actuators and electric resistor elements, which may be a portion of the actuator, converting electric current into thermal energy, and/or one or more cooling elements for expediting the cooling of the SMA actuator once said actuator has induced the flipping of the bi-stable element. The gripping device may furthermore comprise means to adjust the preloading of the bi-stable element.

The gripping device can comprise an actuator body with at least one actuator and a gripper body comprising the bi-stable element and the gripper jaws.

The actuator body and the gripper body can be superposed.

The actuator body and the gripper body can be connected to each other and share a common pivot. Preferably the pivot is a flexural pivot. A flexural pivot as used herein is a pivot comprising flexural elements, such as hinges, i.e. elements, which are capable of being flexed or bent.

The gripper body and the actuator body can be interconnected in such a way that the SMA actuators are coupled with the bi-stable element, for example through a lever element, such as to transmit the deformation of the actuator to the bi-stable element, thus causing the bi-stable element to flip.

A lever element offers the advantage that input force provided by the actuator is amplified to a greater output force transmitted onto the bi-stable element. As a result, a small force generated by the actuators can be converted into a strong grip and/or a larger movement of the gripper jaws.

This modular arrangement provides the distinct advantage that the gripper device can be adjusted according to the particular requirements. In particular, the modular set-up allows for a serial arrangement of actuators. This has the advantage that the force exerted by the SMA actuators on the bi-stable element can be amplified.

For example, two or more actuator devices can be mounted onto a gripper device in a sandwich arrangement. This arrangement enables the deployment of a greater force onto the bi-stable element of the gripper device. Hence this arrangement is suited for applications where a firm grip and/or a larger movement of the gripper jaws is required.

Such firmer grip and/or larger movement can be driven by a bi-stable element having a greater resistance to changing its stable state. For flipping into a different stable state such a bi-stable element must be subjected to a force, which is larger than the force provided by a single actuator body. Hence, the serial arrangement of actuator bodies, respectively actuators is capable of delivering the necessary force to trigger the flipping of this less flexible bi-stable element.

The one or more actuator body can comprise a pivotable portion.

The one or more actuator can be connected to said pivotable portion such that the pivotable portion performs a movement, preferably a tipping movement, when an actuator exerts a pull or a push force onto the pivotable element. The pull or push force results from the linear movement performed by the actuator during its transition between the two shapes.

The one or more actuator body can also comprise guiding means, for example guiding pins, which stabilize a translational movement performed by the one or more actuator.

In particular, the guiding means can prevent swerving and/or buckling of the actuators from the direction of the translational movement when the pivotable portion of the actuator body performs a tipping movement.

The gripper body can comprise a first portion with the bi-stable element and a second portion comprising the gripper and, optionally, a tipping element to guide the movement of the gripper jaws. The second portion may furthermore comprise stabilizing elements which stabilize and/or dampen the movement of the gripper jaws.

The individual elements comprised in the first portion and/or in the second portion of the gripper body are arranged in such a way as to fit the specific purpose. By way of example, the bi-stable element may be mounted towards the center of the actuator body. It may also be mounted closer to the lateral sides of the actuator body. Such an arrangement may be preferred when only one gripper jaw is pivotable, and the other gripper jaw is fixed.

The second portion of the gripper body may be arranged to suit a translational opening and closing movement of the gripper jaws. It may also, for example, be arranged to facilitate a rotational opening and closing movement of the gripper jaws.

The first portion of the gripper body can be compatible with the one or a plurality of different actuator bodies. The second portion of the gripper body can be selected according to the intended purpose of the gripping device. Some operations may for example require a rotational grip, while a grip of translationally moving parallel gripper jaws may be better suited for other operations. Other applications may require one fixed gripper jaw and only one (translationally or rotationally) moving gripper jaw for example.

This modularity of the gripper body permits for a greater flexibility in terms of actuator mechanisms and gripping function. The gripping device can therefore easily be adapted and configured to suit particular requirements and settings.

The gripping device can be made from a variety of different materials. Suitable materials for the gripping device are for example silicon, glass, titanium alloy, aluminium alloy, bronze alloy and/or steel to obtain large deformations of flexure parts. Plastics and glass are also well suited materials to electrically and thermically insulate the SMA actuators between them if needed.

Gripper jaws are preferably be made from a material which is suited to the intended use of the device and the object it handles. Gripper jaws may for example be made from a material listed in the previous paragraph.

Gripper jaws may be adapted in order to suit a particular purpose or to perform a particular function. The jaws may take different shapes. The jaws may also comprise blades or means for mounting blades. In this configuration the gripping device is suitable for cutting objects.

The gripping device may furthermore comprise one or more sensors, for example means for detecting the temperature of the SMA actuators, the electric current, the position of gripper jaws and/or force sensors. The gripping device may also comprise a regulation system, which may be closed loop, for controlling the operation of the device.

The gripping device, respectively the actuator body and/or the gripper body may for example be produced by EDM (Electron Discharge Machining) for metal flexible parts. The gripping device may also be produced by femtosecond laser 3D printing to manufacture glass parts and using DRIE (Deep Reactive Ion Etching) for silicon parts.

Although bi-stable SMA actuator devices are known as such, as disclosed for example in US2019203701A1, it has never been suggested to used them for robotic grippers.

### Short description of the drawings

A preferred embodiment of the invention as disclosed in the description is illustrated by the drawings in which:
Figure 1 A to D schematically illustrates an embodiment of the gripping device having one gripper body and one actuator body, with
Figure 1A a perspective view of the gripping device,
Figure 1B an explosion view of the gripping device,
Figure 1C a top view of the gripping device, and
Figure 1D a side view of the gripping device.
Figure 2 schematically illustrates an embodiment of the actuator body.
Figure 3 A and B schematically illustrates an embodiment of the gripper body, with

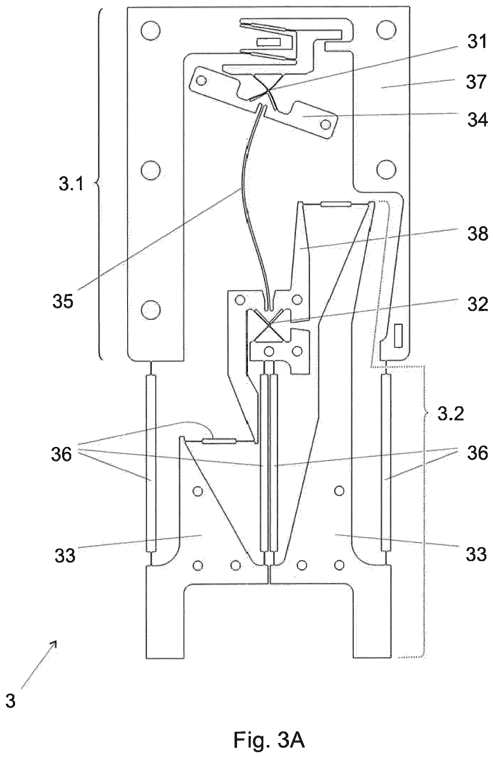

Figure 3A the gripper body in a closed position, and

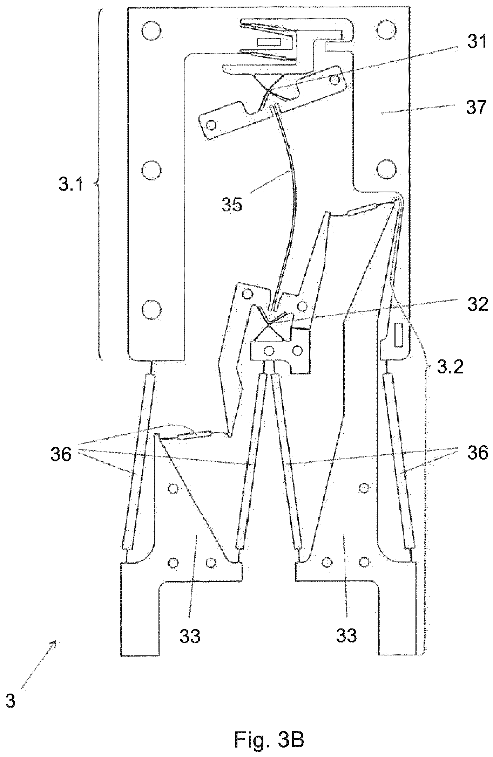

**Figure 3B** the gripper body in an open position.

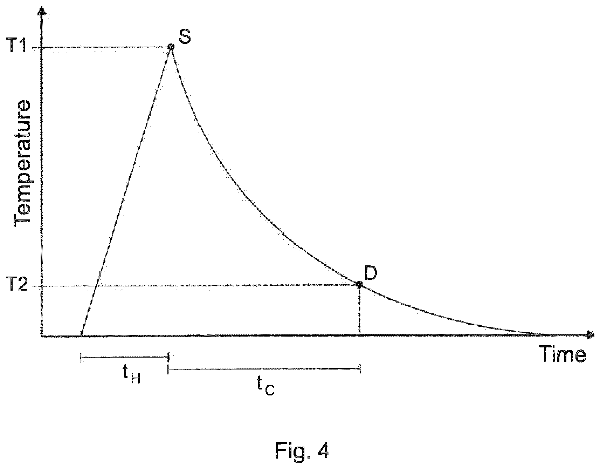

**Figure 4** is a diagram depicting the temperature-dependence of switching times of the gripping device.

### Examples of embodiments of the present invention

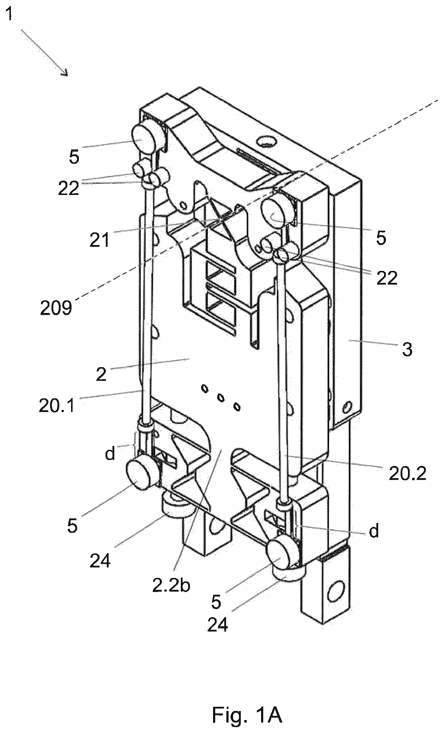

A possible embodiment of the gripping device 1 is schematically depicted in Figures 1A to 1D. The embodiment presented herein comprises one actuator body 2, which is superposed and connected to a gripper body 3. The actuator body 2 comprises two actuators 20.1 and 20.2. The actuators shown in this embodiment are SMA traction springs. The actuators may also be compression springs. The actuators are however not limited to springs. Other suitable shape memory material actuators are possible. The actuators may for example comprise a shape memory Kirigami structure.

The actuators shown herein are mounted onto the actuator body at their extremities by fixation means 5, which may be screws. One extremity of each actuator 20.1, 20.2 is fixed to a pivotable portion 2.1 of the actuator body and the other extremity is fixed to a static portion 2.2 of the actuator body. The actuator 20.1, 20.2 is in a first shape then the temperature of the SMA is below its transition temperature. Upon heating of one of the SMA actuators 20.1, 20.2 to and above its predetermined transition temperature, this actuator 20.1, 20.2 takes a second shape, which is its original shape. The change of shape results a difference in length of the actuator. The length of the actuator 20.1, 20.2 is shorter, when it takes its original second shape.

Each actuator 20.1, 20.2 comprises a longitudinal SMA spring portion 205 and two connecting potions 208 on either end of the spring portion 205. The connecting portions 208 are attached onto the actuator body 2 by the fixation means 5. In a preferred embodiment the connection portions 208 create a distance between the fixation means and the SMA spring 205.

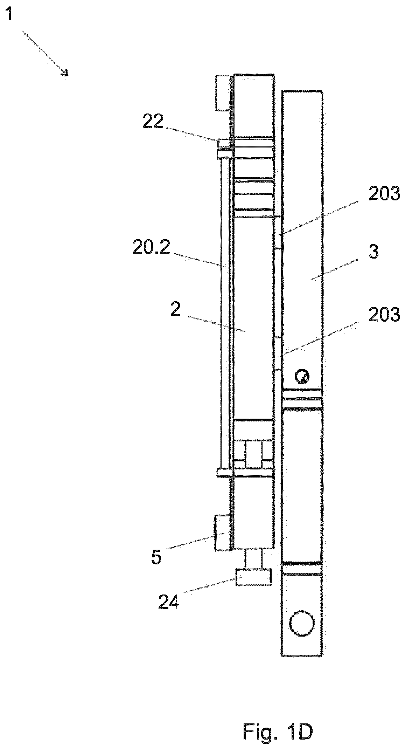

Figure 1B is an explosion view of the gripping device, in which dashed lines indicate the insertion of attachment means 203 (Figure 1D) and adjustment means 24 in order to visualise the connections between the different parts or the two bodies in their assembled state. Attachment means 203 are inserted into attachment openings 23 (Figure 1 B) to fix the actuator body 2 to the gripper body 3.

To avoid lateral swerving of the actuators, the pivotable portion comprises guiding means 22 (Fig. 1D) suitable for controlling the direction of movement of the actuators 20.1, 20.2. The guiding means 22 may for example be guiding pins, wherein the guiding pins are positioned on the pivotable portion 2.1 and arranged in a virtual plane, which is orthogonal to the length of the actuator 20.1, 20.2, on either side of the actuator 20.1, 20.2 such as to restrict the direction of movement of the actuator 20.1, 20.2 to a linear movement.

In the embodiment shown in Figures 1 A to D, the static portion 2.2 of the actuator body furthermore comprises means 24 to adjust preloading of the actuator springs 20.1, 20.2. These means to enable the preloading the static portion 2.2 of the actuator body comprise an adjustable part 2.2a, whereby two lateral recesses create a gap between the adjustable part 2.2a and the rest of the static portion 2.2 and a connection part 2.2b bridges this gap. In the depicted example the adjustment means are screws which are inserted to transverse the adjustable part 2.2a of the static portion and the gap, whereby one end of each adjustment screw 24 contacts the side of the rest of the static portion, which faces the adjustable part 2.2a. This arrangement allows for limited flexibility of the adjustable part 2.2a in respect the rest of the static portion.

One end of the actuators 20.1, 20.2 is fixed to said adjustable portion 2.2a. The adjustment means 24 are configured to increase the width of the recess between the adjustment part 2.2.a and the rest of the static portion 2.2 of the actuator body, when pushed against the side of the rest of the static portion facing the adjustable part 2.2a. Such increase of the recess width between the adjustable part 2.2a and the rest of the static portion 2.2, results in an increase of the distance between the fixation point of the actuators on the pivotable potion 2.1 and the fixation point of the actuator on the adjustable part 2.2a of the static portion. This greater distance increases the preload of the actuator spring. By adjusting the recess width, the adjustment means 24 therefore adjust the preload of the SMA actuator 20.1, 20.2.

The tensile SMA spring portion of the actuator 20.1 is preloaded by an offset distance d. Preferably, in a gripping device having a maximal transversal dimension of 5 centi-meters to 10 centi-meters said offset distance is preferable between 25 milli-meters and 5 milli-meters. The adjustment means 24 permits to adjust this offset distance. This enables adapting offset and preloading of the actuators according to the requirements of the tasks to be performed. In particular, this mechanism also allows for fine tuning to the gripping device.

The actuator body furthermore comprises a pivot 21 allowing for a rotational tipping movement of the pivotable portion 2.1 in relation to the static portion 2.2 of the actuator body when the length of one of the actuators is changed. The pivot 21 can be a cross-axis flexural pivot and thus comprises two thin beams arranged in an X shape. The thin beams are preferably integral with the pivotable portion 2.1 and/or with the static portion 2.2 of the actuator body. Having a flexural pivot thus simplifies the assembly of the various portion of the actuator body 2, which can be formed of one single part. Due to the use of flexural pivots in the gripping device, the number of parts required for transmission of the movement is significantly reduced.

The pivotable portion 2.1 of the actuator body 2 is attached to a lever element 34 of the gripper body 3 shown schematically in figures 3A and 3B, whereby figure 3B shows the gripper body in a closed position and figure 3B in an open position.

The static portion 2.2 of the actuator body is attached to a first portion 3.1 of the gripper body. The lever element 34 is rotatably pivotable around a first pivot 31 comprised in the first portion 3.1 of the gripper body. The pivot 31 can be a cross-axis flexural pivot and thus comprises two thin beams arranged in an X shape. The lever element 34 can be integral with the pivot 31 and with other portions of the gripper body 3. Having a flexural pivot thus simplifies the assembly of the various portion of the actuator body 2, which can be formed of one single part.

The lever element 34 is also connected to the bi-stable element 35, which is a buckled beam in the embodiment presented in the figures.

In an alternative embodiment (not shown) a second actuator body of the same type may be attached to the side of the gripper body 3, which faces away from the first actuator body 2. This arrangement facilitates the use of a greater number of actuators. This arrangement is preferable when a greater transmission of force onto the gripper body is required. The modular composition of the gripping device allows for further arrangements of a number of actuator bodies with respect to a gripper body. Hence, this gripping device can easily be adapted to specific requirements concerning, for example, gripper strength and range of movement of the gripper jaws.

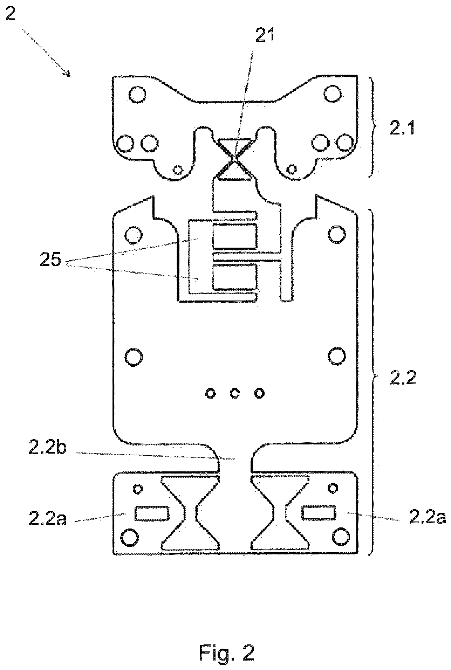

Figure 2 shows the actuator body 2 of the gripping device without actuators and fixation respectively adjustment means. As shown in this figure this embodiment of the actuator body comprises a damper structure 25, which is configured to absorb translational movements of the pivotable portion 2.1 and the static portion 2.2 in relation to each other.

As shown in figures 3A and 3B, the gripper body 3 has two different portions, a first portion 3.1 and a second portion 3.2. The first portion 3.1 serves to transfer the force exerted onto it to the second portion and to maintain the position of the gripping device until a trigger to change the position is activated. The first portion comprises a static frame 37, the first pivot 31, the lever element 34 and the bi-stable element 35. The different features of this first portion 3.1 are arranged in such a way and connected to the actuator body such that the pull force of the SMA actuator, which is a traction spring in this exemplary embodiment, is transferred onto the bi-stable element 35 of the first portion 3.1 of the gripper body.

In this embodiment, the lever element 34 is attached to the pivotable portion 2.1 of the actuator body such that the pivotable portion 2.1 and the lever element 34 jointly perform a rotational movement around the virtual axis 209, which is transgresses the center of the pivot 21 of the actuator body and the center of the first pivot 31 of the gripper body. The lever element 34 serves to amplify the transmission of force from the actuator body 2 onto the bi-stable element 35.

The second portion 3.2 of the gripper body comprises features enabling the execution of the gripping function. These features can be adjusted according to specific requirements. For example, rotational movement of the gripper jaws 33 may be preferable to a parallel sideways movement performed by the embodiment of the gripper element shown in Figures 3A and 3B. In this case, the second portion 3.2 may be adapted accordingly, wherein the first portion 3.1 may remain substantially the same.

As shown in Figure 1B, the first portion 3.1 of the gripper body may furthermore comprise an adjustment screw 39. This screw 39 is used to compress the initially straight bi-stable element 35 to make it buckle. The bi-stable element 35 then bends to the right or to the left creating the bistability behaviour of the gripper. By adjusting the position of the screw, the preload of the bi-stable element 35 can be changed. As a result, the gripping force of the jaws and/or the maximum stroke of the jaws are altered accordingly.

In the embodiment presented in Figure 3a and 3b, the second portion 3.2 comprises a second pivot 32 connected to the bi-stable element. This second pivot is also a cross-axis flexural pivot. A tipping element 38 is provided, as well as several stabilizing elements 36 and two gripper jaws 33. A change of stable state of the bi-stable element 35 from a first stable state to a second stable state or vice versa induces a rotational movement of the tipping element 38 around the second pivot 32. This rotational movement drives a lateral movement of the gripper jaws 33 which remain parallel to each other throughout the movement. The stabilizing elements 36 guide the movement of the gripper jaws and provide the necessary flexibility to dampen their movements.

The structural separation of the force transmission function and the grip execution function within the gripper body 3 offers the advantage that respective portions may be modified to adapt and/or optimize the performance of the gripping device. This functional modularity together with the different possible arrangements of actuator bodies and the gripper body render this gripping device suitable and easily adjustable to a wide range of tasks.

In order to initiate an opening of the gripping device 1 from its closed position, a first actuator 20.1 is heated to the transition temperature of its SMA spring element.

The heat is preferably provided by an electric current, which can be applied to the actuators 20.1, 20.2 by means of a heating element (not shown). In a preferred embodiment the heating comprises at least one portion of the actuator 20.1 acting as an electric resistor for producing heat when an electric current flows through said portion. The invention is however not limited to this embodiment and other heating elements may be used to heat one or more actuator to its transition temperature.

Heat may also be supplied by other means, for example by induction.

The bi-stable element 35 of the gripping device may be designed to disrupt a flow of electric current to the first actuator 20.1 or the first set of actuators, when it takes its second state and to disrupt the flow of electric current to the second actuator 20.2 or the second set of actuator, when it takes its first state. The change of stable state of the bi-stable element 35 may for example trigger a limit switch which is comprised in the actuator body in order to cut the supply of electric current to an actuator or a set of actuators. The SMA actuators 20.1, 20.2 shown in this preferred embodiment comprise traction springs. However, the actuators 20.1, 20.2 may alternatively comprise compression springs. One of the advantages of using compression springs is a better distribution of force. A further advantage resides in the fact that compression springs can be pressed again electric connectors of the heating system without any need for a crimp or a welded connection. Such fixed contacts are susceptible to breaking or being disrupted.

Upon reaching its transition temperature the SMA spring of the first actuator 20.1 takes its second shape, which is its original shape, thereby generating a pull force in the illustrated embodiment, which causes the pivotable portion 2.1 of the gripper body to tilt. Through its connection to the lever element 34 this tilting movement is transferred to the bi-stable element 35, which flips from its first stable state into its second stable state, thereby inducing a rotational movement of the tipping element 38 around the second pivot 32 of the gripper body. Said rotational movement causes an outwards movement of the gripper jaws 33. The gripping device 1 now takes its second open position.

To close the gripping device 1, the second actuator 20.2 needs to be activated by heating. However, the second actuator 20.2 should only be heated to its transition temperature, once the first actuator 20.1 has cooled down sufficiently to take its deformed first shape. Hence, the cooling time of the actuators 20.1, 20.2 is an important factor for the switching time.

The diagram shown in Figure 4 shows the delays in switching events due to heating and cooling times of the SMA actuators. In a first step, a first SMA actuator is heated to its transition temperature T1 over a heating period t_{H}. Once it reaches this temperature T1, the change of stable state of the bi-stable element and hence the change in position of the gripper jaws is triggered. This is the switching event of the bi-stable element depicted as event S in Figure 4. Heat supply to the first actuator is then cut and the first actuator cools down over a subsequent cooling period tc. The change of shape of a second, antagonistic actuator can only be triggered once the temperature of the first actuator falls underneath a threshold temperature T2 below which the first actuator shows little to no resistance to deformation, depicted as event D in Figure 4.

The switching time is the sum of the time periods T1, the heating time, and T2 the cooling time. Preferably, the switching time is less than 3 seconds, or less than 2 seconds, ideally less than 0.5 seconds.

Different factors influence the speed of cooling of the SMA springs, such as diameter of the wires and the section of the springs for example. Heat dissipation increases with the decrease in wire diameter. Fine wires therefore cool down quicker than thick wires. However, a fine wire is less robust than a wire with a bigger diameter and may not be sufficiently strong to generate enough pull force in order to trigger the change of the stable state of the bi-stable element. Hence, a balance must be struck between thickness of the wire and the strength to be generated by it. The shape of the cross section of a wire may also contribute to the speed of heat dissipation.

A spring for a gripping device of a maximum transversal dimension of 5 centi-meter to 10 centi-meters preferably has a diameter of less than 0.5 millimeters, ideally of less than 0.2 millimeters.

Springs with a non-circular diameter show a more rapid dissipation of heat than circular springs. Also, an increase of the spring pitch results in a decrease of cooling time, while the force of the spring is increased.

The outer diameter of a SMA spring for a gripping device of a maximum transversal dimension of 5 centi-meters to 10 centi-meters is for example between 0.1 milli-meter and 5 milli-meters, preferably between 0.3 milli-meter and 2.5 milli-meters. The preferred pitch of the SMA spring has approximately the same dimension as the diameter of the wire, which is preferably between 0.1 milli-meters and 0.5 milli-meters, ideally approximately 0.2 milli-meters for a gripping device of a maximum transversal dimension of 5 centi-meter to 10 centi-meters.

The cooling may also be assisted by providing active cooling elements, such as a thermocouple or a liquid-based cooling system. The cooling system may for example be a Peltier heatsink.

## Claims

1. A gripping device (1) comprising:
- gripper jaws (33) designed to take a first position for gripping an object and a second position for releasing the object,
- one or more actuators (20.1, 20.2) formed with a shape memory material, designed to change from a first shape to a second shape upon reaching a predetermined transition temperature,
- at least one controllable heating element for heating the one or more actuators (20.1, 20.2),
- a bi-stable element (35) capable of switching between a first stable state and a second stable state,
wherein the at least one actuator (20.1, 20.2) is coupled to the bi-stable element (35) such that
- the one or more actuator (20.1, 20.2) is arranged to exert a force, which may be a pull force or a push force, on the bi-stable element (35) when the one or more actuator (20.1, 20.2) takes its second shape, and
- said force is capable of causing the bi-stable element (35) to switch from its first stable state to its second stable state and/or from its second stable state to its first stable state; and
wherein said gripper jaws (33) are coupled to the bi-stable element (35) such that the jaws (33) are in the first position when the bi-stable element (35) is in its first stable state, and in the second position when the bi-stable element (35) is in its second stable state.

2. A gripping device according to claim 1, wherein the shape memory material is a shape memory alloy, preferably a nickel-titanium alloy.

3. A gripping device according to claim 1 or 2, wherein the force to maintain the position of at least one gripper jaw (33) is provided solely by the bi-stable element (35).

4. A gripping device according to any of the preceding claims, said bi-stable element (35) comprising a beam.

5. A gripping device according to any of the preceding claims, said at least one actuator (20.1, 20.2) comprising a traction spring or a compression spring

6. A gripping device according any of the preceding claims, comprising a lever element (34) arranged to transfer the pull force or the push force generated by the one or more actuator (20.1, 20.2) onto the bi-stable element (35).

7. A gripping device according any of the preceding claims, comprising one or more flexural pivots.

8. A gripping device according any of the preceding claims, comprising two actuators (20.1, 20.2) or two sets of actuators, wherein a first actuator (20.1) or set of actuators is arranged to exert a first force for switching the bi-stable element (35) from its first stable state to its second stable state, and wherein a second actuator (20.2) or a second set of actuators is arranged to exert a second force for switching the bi-stable element (35) to its first stable state.

9. A gripping device according to any of the preceding claims, wherein said heating element comprises at least one portion of said actuator (35) acting as an electric resistor for producing heat when an electric current flows through said portion.

10. A gripping device according to any of the preceding claims, wherein the bi-stable element is designed to disrupt a flow of electric current to one more actuator (20.1, 20.2) when switching from one of its stable state to the other stable state.

11. A gripping device according to any of the preceding claims, further comprising active cooling elements, for example Peltier heatsinks, a liquid-based cooling system, or a thermocouple, for cooling of the actuators (20.1, 20.2).

12. A gripping device according to any of the preceding claims, comprising:
an actuator body (2), said at least one actuator (20.1, 20.2) being mounted onto said actuator body,
a gripper body (3) with a first portion (3.1) comprising the bi-stable element (35) and a second portion (3.2) comprising the gripper jaws (33),
wherein said actuator body (2) and said gripper body (3) are superposed and connected to each other such that the force generated by the shape change of the actuator (20.1, 20.2) at the transition temperature is transferred to the gripper body (3).

13. A gripping device according to any of the preceding claims, wherein the first portion (3.1) of the gripper body comprises the lever element (34), which is dynamically coupled to the actuator body (2) and to the bi-stable element (35) such that the lever element (34) can induce the bi-stable element (35) to switch from its first stable state into its second stable state and/or from its second stable state to its first stable state when the one or more actuator (20.1, 20.2) changes its shape when heated to its transition temperature.

14. A gripping device according to any of the preceding claims, wherein the second portion (3.2) of the gripper body further comprises a tipping element (38), which is connected to the bi-stable element (35) such that it performs a tilting movement when the bi-stable element (35) changes its stable state, and which is designed to induce the movement of at least one gripper jaw (33).

15. A gripping device according to claim 14, wherein at least one gripper jaw (33) performs a translational movement or a rotational movement when changing between the first position and the second position.

16. A gripping device according to any of the preceding claims, wherein one gripper body (3) is connected to more than one actuator bodies (2) in a sandwich-type arrangement.

17. A gripping device according to any of the preceding claims, which is a micro-gripping device, only capable of manipulating objects of a maximum transversal dimension below 5 centi-meters, or below 2 centi-meters, or below 5 milli-meters.

18. A method for manipulating objects based on the gripping device 1 of claims 1 to 17, comprising the steps of
- arranging the gripping device 1 at a distance to an object, which is suitable for the object's manipulation,
- heating one or more first shape memory material actuator (20.1) by applying heat, preferably provided by means of an electric current, in such a way that the actuator (20.1) reaches its predetermined transition temperature, said transition temperature causing the actuator (20.1) to change from a first shape into a second shape,
- resulting in the one or more first actuator (20.1) to exert a pull force or a push force on the bi-stable element (35), which causes the bi-stable element (35) to switch from its first stable state into its second stable state, thereby
(i) causing at least one gripper jaw (33) of the gripping device to change its position from a first, closed position to a second, open position, and
(ii) disrupting the heat supply to the one or more first actuator (20.1), such that the one or more first actuator (20.1) cools down and takes its first shape, while the bi-stable element (35) maintains the open position of the one or more gripper jaw (33),
- heating one or more second actuator (20.2), preferably by means of electric current, to its predetermined transition temperature, such that said second actuator (20.2) changes from its first shape to its second shape,
- thereby exerting a pull force or a push force on the bi-stable element (35) causing the bi-stable element (35) to switch from its second stable state into its first stable state, thereby causing at least one gripper jaw (33) to take its first, closed position.
